# FASCICULE DE BREVET EUROPEEN

(11) **EP 4 441 392 B1**
(45) Date de publication et mention de la délivrance du brevet: **26.08.2026**
(21) Numéro de dépôt: 22830440.8
(22) Date de dépôt: 02.12.2022
(51) Int. Cl.: F16H 57/00, B60K 1/00, F16D 1/10, F16H 57/021, F16H 57/02, F16H 57/022, F16D 1/033

(54) **ENSEMBLE DE PROPULSION, NOTAMMENT POUR VÉHICULE AUTOMOBILE**
ANTRIEBSANORDNUNG, INSBESONDERE FÜR EIN KRAFTFAHRZEUG
DRIVE ASSEMBLY, IN PARTICULAR FOR A MOTOR VEHICLE

(30) Priorité: 03.12.2021 FR 2112941
(43) Date de publication de la demande: 09.10.2024
(73) Titulaire: VALEO EMBRAYAGES, 80009 Amiens (FR)
(72) Inventeur: VERHOOG, Roël, 95892 CERGY PONTOISE (FR); FOUCART, Gregory, 95892 CERGY PONTOISE (FR); SERHAL, Jad, 95892 CERGY PONTOISE (FR); MAUREL, Herve, 95892 CERGY PONTOISE (FR)
(74) Mandataire: Valeo Powertrain Systems
(86) Numéro de dépôt international: PCT/EP2022/084301
(87) Numéro de publication internationale: WO 2023/099774

(56) Documents cités:
- DE-A1- 102011 015 085
- US-A- 1 971 968
- US-A- 2 036 389
- US-A- 5 687 612
- US-A- 5 821 653
- US-A1- 2016 099 632

## Description

### Domaine technique

L'invention se rapporte au domaine des ensembles de propulsion, notamment pour véhicule automobile.

L'invention concerne en particulier les ensembles de propulsion comportant un dispositif de réduction qui comporte un arbre d'entrée équipé d'une roue dentée destinée à coopérer avec une autre roue dentée du dispositif de réduction et un moteur électrique qui comporte un arbre de rotor qui est disposé coaxialement à l'arbre d'entrée et est accouplé en rotation à celui-ci.

### Arrière-plan technologique

Le document US5295413 divulgue un ensemble de propulsion du type précité. L'arbre d'entrée du dispositif de réduction est guidé en rotation au moyen d'un premier et d'un deuxième paliers à roulement qui sont respectivement montés dans un premier et un deuxième logements d'un carter. L'arbre de rotor est guidé en rotation au moyen du deuxième palier à roulement précité et d'un troisième palier à roulement qui est monté dans un troisième logement du carter. Ainsi, le deuxième palier à roulement assure à la fois le guidage de l'arbre d'entrée du dispositif de réduction et de l'arbre de rotor de sorte que l'ensemble de propulsion ne comporte que trois paliers à roulement pour guider en rotation à la fois l'arbre d'entrée et l'arbre de rotor, ce qui permet notamment de le simplifier et de limiter son coût.

Un tel ensemble de propulsion n'est pas pleinement satisfaisant. En effet, le contact de la roue dentée de l'arbre d'entrée contre une autre roue dentée du dispositif de réduction génère sur l'arbre d'entrée des efforts radiaux importants qui se traduisent par un fléchissement dudit arbre d'entrée. Un tel fléchissement de l'arbre d'entrée est susceptible de générer des bruits de dentures et des vibrations indésirables.

Or, la demanderesse a constaté qu'un agencement dans lequel un palier à roulement guide en rotation à la fois l'arbre d'entrée et l'arbre de rotor augmente le fléchissement de l'arbre d'entrée et engendre davantage de bruits de denture et de vibrations, car la longueur des surfaces de portée internes de ces arbres à l'intérieur du deuxième palier à roulement est réduite.

Le document US2016/099632A1 divulgue un ensemble de propulsion.

### Résumé

Une idée à la base de l'invention est donc de proposer un ensemble de propulsion du type précité, c'est-à-dire comportant un palier à roulement assurant à la fois le guidage en rotation de l'arbre d'entrée du dispositif de réduction et de l'arbre de rotor et dans lequel les vibrations indésirables sont limitées.

Pour ce faire, selon un premier aspect, l'invention fournit un ensemble de propulsion comportant :
- un carter comportant un premier logement présentant une première surface de portée externe, un deuxième logement présentant une deuxième surface de portée externe et un troisième logement présentant une troisième surface de portée externe,
- un dispositif de réduction comportant un arbre d'entrée qui est équipé d'une roue de transmission et est guidé en rotation à l'intérieur du carter, selon un axe X, au moyen d'un premier et d'un deuxième paliers à roulement, l'arbre d'entrée comportant une première surface de portée interne et une deuxième surface de portée interne disposées axialement de part et d'autre de la roue de transmission, le premier palier à roulement étant monté dans le premier logement et disposé radialement entre la première surface de portée externe et la première surface de portée interne , le deuxième palier à roulement étant monté dans le deuxième logement et disposé radialement entre la deuxième surface de portée externe et la deuxième surface de portée interne de l'arbre d'entrée ,
- un moteur électrique qui comporte un stator fixé à l'intérieur du carter et un rotor qui comporte un arbre de rotor qui est accouplé en rotation à l'arbre d'entrée du dispositif de réduction et qui est guidé en rotation à l'intérieur du carter au moyen du deuxième palier à roulement et d'un troisième palier à roulement, l'arbre de rotor comportant une première surface de portée interne et une deuxième surface de portée interne, la première surface de portée interne de l'arbre de rotor étant logée radialement à l'intérieur du deuxième palier à roulement, le troisième palier à roulement étant logé dans le troisième logement et disposé radialement entre la troisième surface de portée externe et la deuxième surface de portée interne de l'arbre de rotor,
dans lequel la deuxième surface de portée interne de l'arbre d'entrée présente au moins une portion présentant une longueur axiale supérieure à 60 % de la dimension axiale du deuxième palier à roulement.

Ainsi, avec cette répartition de la portée du palier à roulement, l'arbre d'entrée est guidé dans le deuxième palier à roulement sur une longueur axiale plus importante et le fléchissement de l'arbre d'entrée est limité, ce qui permet de limiter, en conséquence, les vibrations et bruits de denture.

Selon des modes de réalisation, un tel ensemble de propulsion peut comporter une ou plusieurs des caractéristiques suivantes cependant, les modes particuliers de réalisation de l'invention sont définis dans les revendications dépendantes.

Selon un mode de réalisation, l'ensemble de propulsion présente une interférence de serrage entre l'arbre d'entrée et le deuxième palier à roulement (en particulier sa bague intérieure) et une interférence de serrage entre l'arbre de rotor et le deuxième palier à roulement.

Selon un mode de réalisation, l'interférence de serrage entre l'arbre d'entrée et le deuxième palier à roulement (en particulier sa bague intérieure) est supérieure à l'interférence de serrage entre l'arbre de rotor et le deuxième palier à roulement.

Selon un mode de réalisation, la roue de transmission est une roue dentée configurée pour engrener avec une autre roue du dispositif de réduction.

Selon un mode de réalisation, la deuxième surface de portée interne de l'arbre d'entrée présente en partie ou en totalité une longueur axiale qui est strictement comprise entre 60 et 80 % de la dimension axiale du deuxième palier à roulement.

Selon un mode de réalisation, la longueur axiale de la deuxième surface de portée interne de l'arbre d'entrée est constante ou sensiblement constante sur toute la circonférence de l'arbre d'entrée. En d'autres termes, la deuxième surface de portée interne de l'arbre d'entrée présente en partie ou en totalité une longueur axiale qui est strictement comprise entre 60 et 80 % de la dimension axiale du deuxième palier à roulement. Ainsi, la fabrication de l'arbre d'entrée s'en trouve simplifiée.

Selon un mode de réalisation, la première surface de portée interne de l'arbre de rotor présente, en partie ou en totalité, une longueur axiale supérieure ou égale à 20 % de la dimension axiale du deuxième palier à roulement. Ceci assure un bon compromis entre la largeur du deuxième palier à roulement qui est affectée au guidage de l'arbre subissant le plus d'effort, à savoir l'arbre d'entrée, et l'arbre subissant le moins d'effort, à savoir l'arbre de rotor.

Selon un mode de réalisation, la longueur axiale de la première surface de portée interne de l'arbre de rotor est constante ou sensiblement constante sur toute la circonférence de l'arbre d'entrée. Ainsi, la fabrication de l'arbre de rotor s'en trouve simplifiée.

Selon un mode de réalisation, l'arbre d'entrée et l'arbre de rotor sont accouplés l'un à autre par un emmanchement à cannelures.

Selon un mode de réalisation, l'un parmi l'arbre d'entrée et l'arbre de rotor comporte une portion mâle cannelée qui est emmanchée dans une portion femelle cannelée de l'autre. Ceci permet de rendre les fonctions d'accouplement de l'arbre d'entrée et de l'arbre de rotor et de guidage desdits arbres indépendantes, ce qui simplifie la fabrication desdits arbres de rotor et d'entrée.

Selon un mode de réalisation, l'arbre d'entrée et l'arbre de rotor sont accouplés l'une à l'autre par une première et une deuxième denture en prise l'une dans l'autre et respectivement ménagées à une extrémité de l'arbre d'entrée et à une extrémité de l'arbre de rotor, la première denture et la deuxième denture présentant des dents s'étendant axialement et formant respectivement la deuxième surface de portée interne de l'arbre d'entrée et la première surface de portée interne de l'arbre de rotor.

Selon un mode de réalisation, les dents de la première denture présentent une dimension axiale I1 supérieure à 60 % et de préférence supérieure à 90 % de la dimension axiale I3 du deuxième palier à roulement.

Selon un mode de réalisation, les dents de la deuxième denture présentent une dimension axiale I2 supérieure à 60 % et de préférence supérieure à 90 % de la dimension axiale I3 du deuxième palier à roulement.

Selon un mode de réalisation, la surface de portée interne de l'arbre d'entrée présente une surface strictement comprise entre 60 et 80 % d'une surface interne de guidage du deuxième palier à roulement.

Selon un mode de réalisation, la dimension axiale du deuxième palier à roulement est comprise entre 5 et 35 mm. Ainsi, le coût et l'encombrement du deuxième palier à roulement sont limités.

Selon un mode de réalisation, la dimension axiale I3 est, de préférence, comprise entre 8 et 20 mm.

Selon un mode de réalisation, le premier logement présente une première surface d'appui axial bordant la première surface de portée externe et le deuxième logement présente une deuxième surface d'appui axial bordant la deuxième surface de portée externe, l'arbre d'entrée comportant en outre une première surface d'appui axial bordant la première surface de portée interne et une deuxième surface d'appui axial bordant la deuxième surface de portée interne ; le premier palier à roulement étant disposé axialement entre la première surface d'appui axial du premier logement et la première surface d'appui axial de l'arbre d'entrée, le deuxième palier à roulement étant disposé axialement entre la deuxième surface d'appui axial du deuxième logement et la deuxième surface d'appui axial de l'arbre d'entrée.

Selon un mode de réalisation, le troisième logement présente une troisième surface d'appui axial et l'arbre de rotor comporte une surface d'appui axial bordant la deuxième surface de portée interne de l'arbre de rotor, un organe élastique étant disposé, dans un état comprimé, entre la troisième surface d'appui axial et le troisième palier à roulement de manière à exercer un effort axial sur le troisième palier à roulement en direction du deuxième palier à roulement qui plaque le troisième palier à roulement contre la troisième surface d'appui axial. Ceci permet de précharger axialement le troisième palier à roulement.

Selon un mode de réalisation, la surface d'appui axial de l'arbre de rotor borde la deuxième surface de portée interne de l'arbre de rotor vers la première surface de portée interne de l'arbre de rotor.

Selon un mode de réalisation, l'arbre de rotor est positionné axialement en butée contre l'arbre d'entrée
Selon un mode de réalisation avantageuse, la butée est agencée axialement au bord de la deuxième surface de portée interne de l'arbre d'entrée. Autrement dit, , une surface d'extrémité de l'arbre d'entrée qui est attenante à la deuxième surface de portée interne de l'arbre d'entrée est en butée contre une surface d'extrémité de l'arbre de rotor qui est attenante à la première surface de portée interne. Dans ce cas, la deuxième surface de portée interne de l'arbre d'entrée prolonge la première surface de portée interne de l'arbre de rotor sans discontinuité, c'est à dire sans jeu axial. Ceci permet d'utiliser toute la dimension axiale du deuxième palier à roulement pour guider en rotation soit l'arbre d'entrée soit l'arbre de rotor.

Selon un mode de réalisation, dans un ou tous les plans comprenant l'axe X, la dimension axiale du deuxième palier à roulement est égale à somme de la longueur axiale de la deuxième surface de portée interne de l'arbre d'entrée et de la longueur axiale de la première surface de portée interne de l'arbre de rotor.

Selon un mode de réalisation, l'arbre de rotor est positionné en butée contre l'arbre d'entrée sous l'effet de l'effort axial exercé par l'organe élastique sur le troisième palier à roulement.

Selon un mode de réalisation, l'organe élastique est une rondelle ondulée ou une rondelle Belleville.

Selon un mode de réalisation, le premier palier à roulement et le deuxième palier à roulement sont préchargés axialement, respectivement entre la première surface d'appui axial du premier logement et la première surface d'appui axial de l'arbre d'entrée et entre la deuxième surface d'appui axial du deuxième logement et la deuxième surface d'appui axial de l'arbre d'entrée. Ceci permet de limiter les vibrations et les jeux de dentures susceptibles d'être générés lors de la rotation de l'arbre d'entrée, notamment en raison des jeux de positionnement et/ou des phénomènes de contraction ou dilatation thermique.

Selon un mode de réalisation, la première surface d'appui axial de l'arbre d'entrée est disposée axialement entre la première surface de portée interne et la roue de transmission et la deuxième surface d'appui axial de l'arbre d'entrée est disposée axialement entre la deuxième surface de portée interne et la roue de transmission, le premier palier à roulement et le deuxième palier à roulement étant préchargés axialement l'un vers l'autre au moyen d'au moins un élément de précharge qui est disposé axialement entre la première surface d'appui axial du premier logement et le premier palier à roulement ou entre la deuxième surface d'appui axial du deuxième logement et le deuxième palier à roulement.

Selon un mode de réalisation, l'élément de précharge est une cale annulaire ou une rondelle élastique.

Selon un mode de réalisation, le carter comporte une première partie, une deuxième partie et une troisième partie qui sont fixées les unes aux autres, le premier logement, le deuxième logement et le troisième logement étant respectivement formés dans la première partie, la deuxième partie et la troisième partie. Ceci permet de limiter le nombre d'éléments composant le carter.

Selon un mode de réalisation, le carter comporte une première partie, une deuxième partie, une troisième partie et une quatrième partie qui sont fixées les unes aux autres, le premier logement et le troisième logement étant respectivement formés dans la première partie et la troisième partie, le deuxième logement étant ménagé dans la deuxième partie et la quatrième partie et la deuxième surface de portée externe s'étendant dans la deuxième partie et dans la quatrième partie. Ainsi, dans un tel mode de réalisation, le deuxième palier à roulement permet d'assurer un centrage du compartiment de transmission défini par la première et deuxième parties par rapport au compartiment moteur défini par la quatrième et troisième partie.

Selon un mode de réalisation, le premier palier à roulement comporte une bague interne, une bague externe et des corps roulants interposés entre la bague interne et la bague externe.

Selon un mode de réalisation, la bague externe du premier palier à roulement est logée radialement à l'intérieur de la première surface de portée externe et disposée en appui, directement ou indirectement, contre la première surface d'appui axial du premier logement.

Selon un mode de réalisation, la bague interne du premier palier à roulement est disposée radialement autour de la première surface de portée interne de l'arbre d'entrée et en appui contre la première surface d'appui axial de l'arbre d'entrée.

Selon un mode de réalisation, le deuxième palier à roulement comporte une bague interne, une bague externe et des corps roulants interposés entre la bague interne et la bague externe.

Selon un mode de réalisation, la bague externe du deuxième palier à roulement est logée radialement à l'intérieur de la deuxième surface de portée externe et disposée en appui, directement ou indirectement, contre la deuxième surface d'appui axial du deuxième logement.

Selon un mode de réalisation, la bague interne du deuxième palier à roulement est disposée radialement autour de la deuxième surface de portée interne de l'arbre d'entrée et de la première surface de portée interne de l'arbre de rotor et en appui axialement contre la deuxième surface d'appui axial de l'arbre d'entrée.

Selon un mode de réalisation, le troisième palier à roulement comporte une bague interne, une bague externe et des corps roulants interposés entre la bague interne et la bague externe.

Selon un mode de réalisation, la bague externe du troisième palier à roulement est logée radialement à l'intérieur de la troisième surface de portée externe.

Selon un mode de réalisation, la bague interne du troisième palier à roulement est disposée radialement autour de la première surface de portée interne de l'arbre d'entrée.

### Breve description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 est une vue schématique, en coupe, d'un ensemble de propulsion selon un premier mode de réalisation.
[fig.2] La figure 2 est une vue schématique, en coupe, d'un ensemble de propulsion selon un deuxième mode de réalisation.
[fig.3] La figure 3 est une vue schématique, en coupe, d'un ensemble de propulsion selon un troisième mode de réalisation.
[fig.4] La figure 4 est une vue schématique, en coupe, d'un ensemble de propulsion selon un quatrième mode de réalisation.
[fig.5] La figure 5 est une vue de détail de la figure 1, illustrant plus particulièrement le guidage en rotation de l'arbre d'entrée et de l'arbre de rotor par le deuxième palier à roulement.
[fig.6] La figure 6 est une vue schématique, en perspective, de l'accouplement entre l'arbre d'entrée du dispositif de réduction et l'arbre de rotor selon une première variante de réalisation.
[fig.7] La figure 7 est une vue schématique, en perspective, de l'accouplement entre l'arbre d'entrée du dispositif de réduction et l'arbre de rotor selon une deuxième variante de réalisation.
[fig.8] La figure 8 est une vue schématique, en perspective, de l'accouplement entre l'arbre d'entrée du dispositif de réduction et l'arbre de rotor selon une troisième variante de réalisation.

### Description des modes de réalisation

Dans la description et les revendications, on utilisera, les termes « externe » et « interne » ainsi que les orientations « axiale » et « radiale » pour désigner, selon les définitions données dans la description, des éléments de l'ensemble de propulsion. Par convention, l'axe X de rotation de l'arbre d'entrée du dispositif de réduction définit l'orientation « axiale ». Les termes « externe » et « interne » sont utilisés pour définir la position relative d'un élément par rapport à un autre, par référence à l'axe X, un élément proche de l'axe est ainsi qualifié d'interne par opposition à un élément externe situé radialement en périphérie.

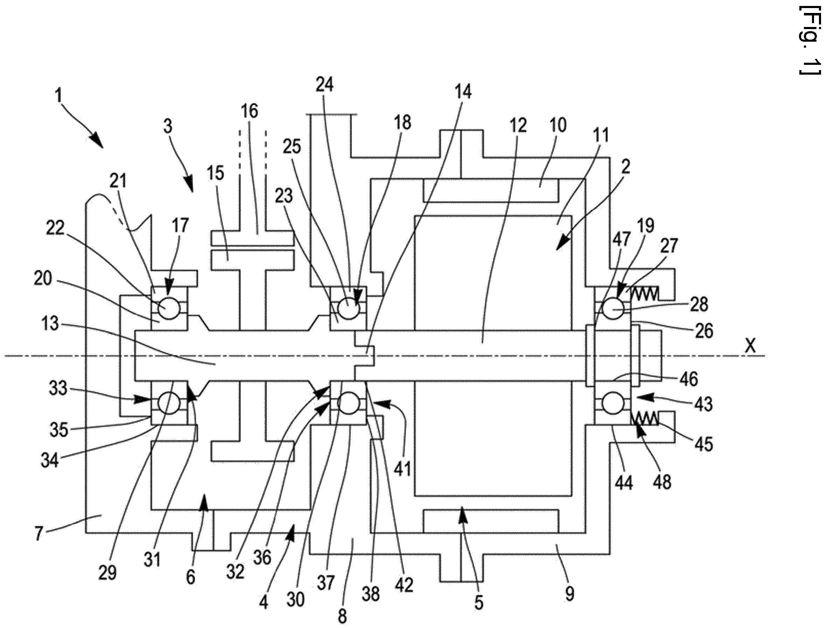

La figure 1 illustre schématiquement et partiellement un ensemble de propulsion 1 pour un véhicule hybride ou électrique selon un mode de réalisation. L'ensemble de propulsion 1 comporte un moteur électrique 2 ainsi qu'un dispositif de réduction 3. L'ensemble de propulsion 1 est ainsi configuré pour générer un couple au moyen du moteur électrique 2 et l'augmenter au moyen du dispositif de réduction 3. L'ensemble de propulsion 1 peut également comporter un dispositif d'entraînement différentiel, non représenté, qui transmet le couple entre le dispositif de réduction 3 et les deux arbres de roue d'un essieu du véhicule en autorisant les deux arbres à tourner à des vitesses différentes.

Selon un exemple de réalisation, un tel ensemble de propulsion 1 est destiné à un véhicule hybride. Ainsi, l'ensemble de propulsion 1 précité est, par exemple, apte à transmettre un couple du moteur électrique 2 vers un essieu arrière ou avant du véhicule tandis qu'un autre ensemble de propulsion comportant un autre moteur, tel qu'un moteur thermique, permet de générer un couple et de le transmettre entre cet autre moteur et les deux arbres de roue de l'autre essieu du véhicule.

Comme représenté sur la figure 1, l'ensemble de propulsion 1 comporte un carter 4 qui définit un compartiment moteur 5 dans lequel est logé le moteur électrique 2 et un compartiment de transmission 6 dans lequel sont logés le dispositif de réduction 3 et le dispositif d'entraînement différentiel. Dans le mode de réalisation de la figure 1, le carter 4 comporte une première partie 7, une deuxième partie 8 et une troisième partie 9 qui sont fixées les unes aux autres. La deuxième partie 8 est disposé axialement entre la première partie 7 et la troisième partie 9. La première partie 7 et la deuxième partie 8 définissent ensemble le compartiment de transmission 6 tandis que la deuxième partie 8 et la troisième partie 9 définissent ensemble le compartiment moteur 5.

Le moteur électrique 2 comporte un stator 10 qui est monté fixe à l'intérieur du compartiment moteur 5 et un rotor 11 qui présente un arbre de rotor 12 monté mobile en rotation selon l'axe X à l'intérieur du compartiment moteur 5.

Le dispositif de réduction 3 comporte un arbre d'entrée 13 qui est monté mobile en rotation autour de l'axe X à l'intérieur du compartiment de transmission 6 et qui est accouplé en rotation à l'arbre de rotor 12. Selon le mode de réalisation illustré sur la figure 1, l'arbre d'entrée 13 et l'arbre de rotor 12 sont accouplés l'un à l'autre par un emmanchement à cannelures 14. Ainsi, l'un des deux arbres précités 13 comporte une portion mâle cannelée qui est emmanchée dans une portion femelle cannelée de l'autre arbre 12.

L'arbre d'entrée 13 est équipé d'une roue de transmission 15, qui est par exemple une roue dentée en prise avec une roue dentée 16 de plus grande dimension, portée par un autre arbre, non représenté, du dispositif de réduction 3.

L'arbre d'entrée 13 du dispositif de réduction 3 est guidé en rotation sur le carter 4 au moyen d'un premier palier à roulement 17 et d'un deuxième palier à roulement 18 tandis que l'arbre de rotor 12 est guidé en rotation sur le carter 4 au moyen dudit deuxième palier à roulement 18 et d'un troisième palier à roulement 19. En d'autres termes, le deuxième palier à roulement 18 assure à la fois le guidage de l'arbre d'entrée 13 et de l'arbre de rotor 12.

Chacun des premier, deuxième et troisième paliers à roulement 17, 18, 19 comporte une bague interne 20, 23, 26, une bague externe 21, 24, 27 et des corps roulants 22, 25, 28 interposés entre la bague interne 20, 23, 26 et la bague externe 21, 24, 27. Les corps roulants 22, 25, 28 sont ici des billes mais peuvent également être des rouleaux ou des aiguilles notamment. La bague interne 20 du premier palier à roulement 17 et la bague interne 23 du deuxième palier à roulement 18 sont respectivement emmanchées sur une première et une deuxième surfaces de portée interne 29, 30 de l'arbre d'entrée 13. Chacune des première et deuxième surfaces de portée internes 29, 30 est ménagée à l'une des extrémités dudit arbre d'entrée 13. Elles sont chacune délimitées en direction de l'autre extrémité de l'arbre d'entrée 13 par un épaulement. Les épaulements définissent ainsi une première et une deuxième surfaces d'appui axial 31, 32 contre lesquelles viennent respectivement, en butée, la bague interne 20 du premier palier à roulement 17 et la bague interne 23 du deuxième palier à roulement 18.

Le premier palier à roulement 17 est logé à l'intérieur d'un premier logement 33, cylindrique, ménagé dans la première partie 7 du carter 4. Le premier logement 33 comporte une première surface de portée externe 34 dans laquelle est emmanchée la bague externe 21 du premier palier à roulement 17 ainsi qu'un épaulement qui borde la première surface de portée externe 34 vers l'extérieur du compartiment de transmission 6. L'épaulement définit ainsi une première surface d'appui axial 35 du carter 4 contre laquelle vient en butée la bague externe 21 du premier palier à roulement 17. Ainsi, le premier palier à roulement 17 est disposé radialement entre la première surface de portée externe 34 du premier logement 33 et la première surface de portée interne 29 de l'arbre d'entrée 13 et axialement entre la première surface d'appui axial 35 du carter 4 et la première surface d'appui axial 31 de l'arbre d'entrée 13.

Le deuxième palier à roulement 18 est logé à l'intérieur d'un deuxième logement 36, cylindrique, ménagé dans la deuxième partie 8 du carter 4. Le deuxième logement 36 comporte une deuxième surface de portée externe 37 dans laquelle est emmanchée la bague externe 24 du deuxième palier à roulement 18 ainsi qu'un épaulement qui borde la deuxième surface de portée externe 24 vers le compartiment moteur 5. L'épaulement définit ainsi une deuxième surface d'appui axial 38 du carter 4 contre laquelle vient en butée la bague externe 24 du deuxième palier à roulement 18. Le deuxième palier à roulement 18 est, ainsi, disposé radialement entre la deuxième surface de portée externe 37 du deuxième logement 36 et la deuxième surface de portée interne 30 de l'arbre d'entrée 13 et axialement entre la deuxième surface d'appui axial 38 du carter 4 et la deuxième surface d'appui axial 32 de l'arbre d'entrée 13.

L'appui des paliers à roulement 17, 18 sur les surfaces d'appui axial précitées 31, 32, 35, 38 peut se faire de façon directe ou indirecte, autrement dit au moyen d'éléments interposés axialement.

Par ailleurs, le premier palier à roulement 17 et le deuxième palier à roulement 18 sont montés dans le carter 4, dans un état préchargé axialement, c'est-à-dire que le premier palier à roulement 17 est compressé entre la première surface d'appui axial 35 du carter 4 et la première surface d'appui axial 31 de l'arbre d'entrée 13 et que le deuxième palier à roulement 18 est compressé entre la deuxième surface d'appui axial 38 du carter 4 et la deuxième surface d'appui axial 32 de l'arbre d'entrée 13. Une telle précharge permet ainsi de limiter les bruits et vibrations susceptibles d'être générés par l'arbre d'entrée 13 ainsi que par le premier et le deuxième paliers à roulement 17, 18 lors de la rotation de l'arbre d'entrée 13.

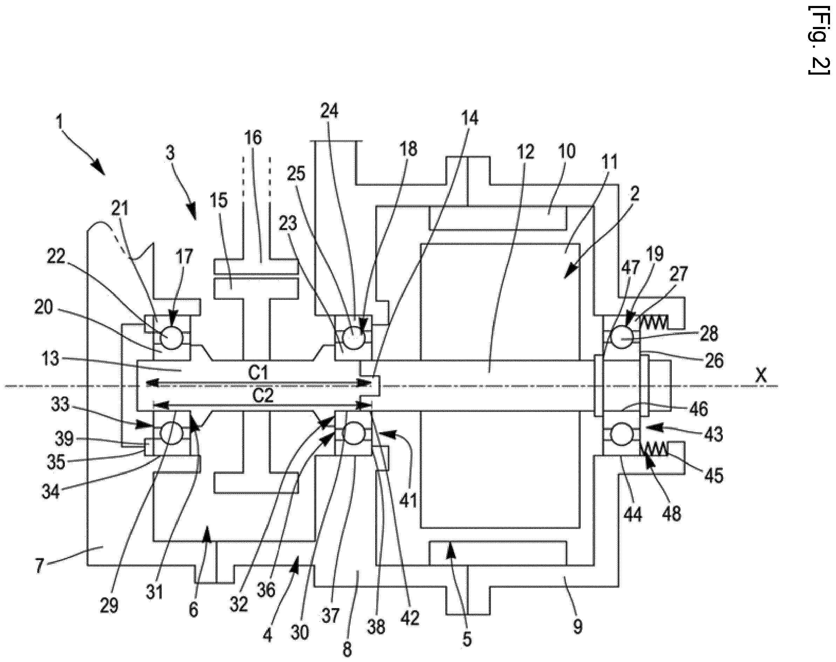

Selon une première variante de réalisation représentée sur la figure 2, la précharge axiale est réalisée au moyen d'au moins une cale annulaire 39 qui est disposée axialement entre la première surface d'appui axial 35 du carter 4 et la bague externe 21 du premier palier à roulement 17. En alternative ou en complément, au moins une cale annulaire est disposée axialement entre la deuxième surface d'appui axial 38 du carter 4 et la bague externe 24 du deuxième palier à roulement 18 (non représenté).

La cale annulaire 39 présente une épaisseur qui est dimensionnée de manière à appliquer une précharge déterminée. Pour ce faire, l'on mesure, d'une part, une côte C1 représentative de la distance axiale entre la première et la deuxième surface d'appui axial 35, 38 du carter 4 et, d'autre part, une côte C2 représentative de la somme de la distance axiale entre la première surface d'appui axial 31 et la deuxième surface d'appui axial 32 de l'arbre d'entrée 13 et des dimensions axiales du premier et du deuxième palier à roulement 17, 18. On choisit ensuite une ou plusieurs cales annulaires 39 dont l'épaisseur totale ε est égale à C1 - C2 + Δ, avec Δ une constante dépendant de la précharge axiale souhaitée.

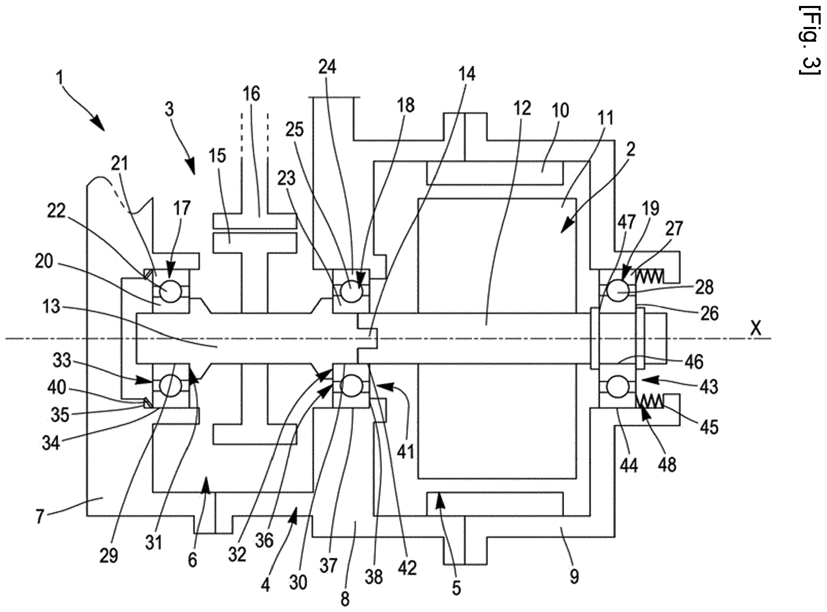

Selon un autre mode de réalisation représenté sur la figure 3, la précharge axiale est obtenue au moyen d'au moins un organe élastique 40, tel qu'une rondelle élastique, qui est disposée axialement entre la première surface d'appui axial 35 du carter 4 et la bague externe 21 du premier palier à roulement 17 et qui exerce un effort sur le premier palier à roulement 17 en direction de la première surface d'appui axial 31 de l'arbre d'entrée 13. En alternative ou en complément, un organe élastique, tel qu'une rondelle élastique, est disposé axialement entre la deuxième surface d'appui axial 38 du carter 4 et la bague externe 24 du deuxième palier à roulement 18 (non représenté). La rondelle élastique peut notamment être une rondelle Belleville ou une rondelle ondulée.

Par ailleurs, en revenant à la figure 1, on observe que le carter 4, et plus particulièrement la deuxième partie 8 du carter 4 comporte une ouverture 41 qui débouche dans le deuxième logement 36 et qui forme un passage entre le compartiment moteur 5 et le compartiment de transmission 6 et permet ainsi à l'arbre de rotor 12 de s'introduire dans la deuxième partie 8 du carter 4. L'arbre de rotor 12 présente une première surface de portée interne 42 qui est emmanchée à l'intérieur de la bague interne 23 du deuxième palier à roulement 18.

L'arbre de rotor 12 est également guidé en rotation par l'intermédiaire d'un troisième palier à roulement 19. Le troisième palier à roulement 19 est logé à l'intérieur d'un troisième logement 43, cylindrique, qui est ménagé dans la troisième partie 9 du carter 4. Le troisième logement 43 comporte une troisième surface de portée externe 44 du carter 4 à l'intérieure de laquelle est emmanchée la bague externe 27 du troisième palier à roulement 19 et un épaulement qui borde la troisième surface de portée externe 44 vers l'extérieur du compartiment moteur 5. L'épaulement définit ainsi une troisième surface d'appui axial 45 du carter 4.

La bague interne 26 du troisième palier à roulement 19 est emmanchée sur une deuxième surface de portée interne 46 de l'arbre de rotor 12 qui est ménagée à une extrémité de l'arbre de rotor 12. La deuxième surface de portée interne 46 est délimitée en direction de l'autre extrémité de l'arbre de rotor 12 par un épaulement. L'épaulement définit ainsi une surface d'appui axial 47 contre laquelle vient en butée la bague interne 26 du troisième palier à roulement 19.

Un organe élastique 48 est disposé, dans un état comprimé, entre la troisième surface d'appui axial 45 du carter 4 et la bague externe 27 du troisième palier à roulement 19 de manière à exercer un effort axial sur le troisième palier à roulement 19 en direction du deuxième palier à roulement 18. L'organe élastique 48 est, par exemple, une rondelle Belleville ou une rondelle ondulée.

De plus, l'arbre de rotor 12 est positionné axialement en butée contre l'arbre d'entrée 13. En d'autres termes, l'arbre de rotor 12 est dépourvu de surface d'appui axial venant en butée contre le deuxième palier à roulement 18. Ceci est particulièrement avantageux en ce que cela permet d'utiliser toute la dimension axiale de la bague interne 23 du deuxième palier à roulement 18 pour guider soit l'arbre d'entrée 13 soit l'arbre de rotor 12. De manière avantageuse, la fonction de butée, c'est-à-dire d'arrêt en translation axiale de l'arbre de rotor 12 contre l'arbre d'entrée 13, est réalisée par les surfaces d'extrémités de l'arbre d'entrée 13 et de l'arbre de rotor 12 qui sont respectivement attenantes à la deuxième surface de portée interne 30 de l'arbre d'entrée 13 et à la première surface de portée interne 42 de l'arbre de rotor 12.

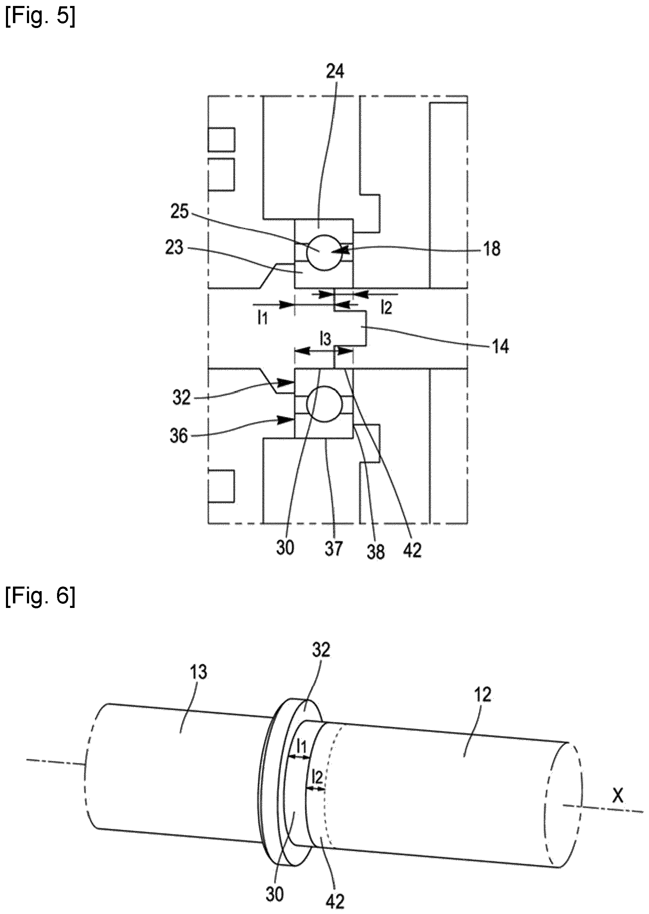

Comme représenté sur les figures 5 et 6, la deuxième surface de portée interne 30 de l'arbre d'entrée 13 présente une longueur axiale I1 et la première surface de portée interne 42 de l'arbre de rotor 12 présente une longueur axiale I2. Les longueurs axiales I1 sont ici constantes sur toute la circonférence des arbres 12, 13 autour de l'axe X. La longueur axiale I1 est supérieure à la longueur axiale I2. II est en effet particulièrement avantageux que l'arbre qui est soumis aux efforts les plus importants, à savoir l'arbre d'entrée 13, présente la surface de portée interne 30 la plus importante afin de limiter au maximum les vibrations et bruits susceptibles d'être générés. De manière avantageuse, la longueur axiale I1 de la surface de portée interne 30 est strictement comprise entre 60 et 80% de la dimension axiale I3 du deuxième palier à roulement 18. Ainsi, la longueur axiale I2 de la surface de portée interne 42 est d'au moins 20 % de la dimension axiale 13, ce qui est suffisant pour assurer le guidage de l'arbre de rotor 12.

De plus, l'interférence de serrage entre l'arbre d'entrée 13 et le deuxième palier à roulement 18 (en particulier sa bague intérieure) est supérieur à l'interférence de serrage entre l'arbre de rotor 12 et le deuxième palier à roulement 18. L'interférence de serrage entre l'arbre d'entrée 13 et le deuxième palier à roulement 18, et l'interférence de serrage entre l'arbre de rotor et le deuxième palier à roulement sont par exemple comprises entre +0.010 mm et +0.06 mm, notamment entre +.0.010 mm et +0.033 mm. En termes de conception, l'interférence de serrage entre l'arbre d'entrée 13 et le deuxième palier à roulement 18 est comprise dans une première plage de valeurs, et l'interférence de serrage entre l'arbre de rotor 12 et le deuxième palier à roulement est comprise dans une deuxième plage de valeurs, la première plage de valeurs et la deuxième plage de valeurs étant distinctes l'une de l'autre, c'est à dire sans recouvrement. Ces plages de valeurs résultent des tolérances de fabrication pour le diamètre intérieur du deuxième palier à roulement, et pour le diamètre extérieur des arbres d'entrée et de rotor. Les dimensionnements de l'arbre d'entrée 13, de l'arbre de rotor 12 et du diamètre intérieur du deuxième palier à roulement sont donc de préférence établies de sorte qu'en prenant en compte les tolérances, l'interface de serrage mini sur l'arbre d'entrée 13 soit supérieure à l'interface de serrage maxi sur l'arbre de rotor 12. Par exemple, si la plage de tolérance associée aux interférence de serrage est de 0.023 mm et s'étend pour l'interférence de serrage entre l'arbre de rotor 12 et le deuxième palier à roulement 18 entre +0.010 mm à +0.033 mm, alors il faut que l'interférence de serrage (avec tolérances) entre l'arbre d'entrée 13 et le deuxième palier à roulement 18 s'étende entre +0.034 et +0.057 mm.

De manière avantageuse, le deuxième palier à roulement 18 présente une dimension axiale comprise entre 5 et 35 mm, de préférence entre 8 et 20 mm, et par exemple de l'ordre de 10 mm.

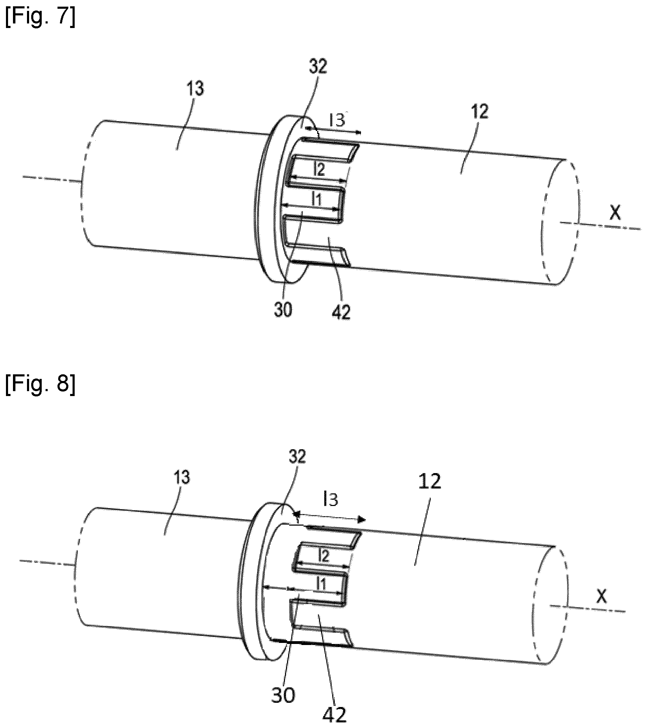

La figure 7 illustre la deuxième surface de portée interne 30 de l'arbre d'entrée 13 et la première surface de portée interne 42 de l'arbre de rotor 12 selon une variante de réalisation. Dans cette variante de réalisation, l'accouplement entre l'arbre d'entrée 13 et l'arbre de rotor 12 est un accouplement à dentures axiales. Les extrémités en regard de l'arbre d'entrée 13 et de l'arbre de rotor 12 présentent chacune une pluralité de dents s'étendant axialement et s'insérant chacune dans un évidement de forme complémentaire ménagé entre deux dents de la denture en regard. En outre, dans la variante de réalisation illustrée, la surface de portée interne 30 de l'arbre d'entrée 13 et la surface de portée interne 42 de l'arbre de rotor 12 sont ménagées sur la surface radialement externe des dentures. Les longueurs axiales I1 et I2 ne sont donc pas constantes sur toute la circonférence des arbres comme dans la variante de réalisation illustrée sur la figure 6. La surface de portée interne 30 de l'arbre d'entrée 13 présente donc des portions, à savoir ses dents, qui présentent une longueur axiale I1 supérieure à 60 % de la dimension axiale I3 du deuxième palier à roulement 18. Dans le mode de réalisation représenté, les dentures de l'arbre d'entrée 13 et de l'arbre de rotor 12 sont identiques de sorte que la longueur axiale I2 de la surface de portée interne 42 de l'arbre de rotor 12 est égale à la longueur axiale I1 de la surface de portée interne 30 de l'arbre de rotor 13. Ainsi, la longueur axiale I2 de la surface de portée interne 42 de l'arbre de rotor 12 est également supérieure à 60% de la dimension axiale I3 du deuxième palier à roulement 18. Sur la figure 7, la longueur axiale I1 et la longueur axiale I2 sont sensiblement égales à la longueur axiale 13.

Toutefois, selon une variante de réalisation avantageuse non représentée, la denture de l'arbre d'entrée 13 et celle de l'arbre de rotor 12 ne sont pas identiques. Plus particulièrement, la surface de portée interne 30 de l'arbre d'entrée 13 présentent avantageusement une surface supérieure à celle de la surface de portée interne 42 de l'arbre de rotor 12. Ainsi, selon un mode de réalisation avantageux, la surface de portée interne 30 de l'arbre d'entrée 13 présente une surface strictement comprise entre 60 et 80 % de la surface interne de la bague interne 23 du deuxième palier à roulement 18.

La figure 8 illustre encore un autre mode de réalisation. Ce mode de réalisation diffère du mode de réalisation décrit précédemment en ce que la surface de portée interne 30 de l'arbre d'entrée 13 n'est pas exclusivement ménagée sur la surface radialement externe des dentures. Ainsi, la surface de portée interne comporte une zone qui s'étend circonférentiellement en continu sur 360° autour de l'axe X et qui est positionné axialement entre la deuxième surface d'appui axial 32 de l'arbre d'entrée 13 et les dentures de l'arbre d'entrée 30. Ceci permet d'augmenter encore davantage la grandeur de la surface de portée interne 30 de l'arbre d'entrée 13.

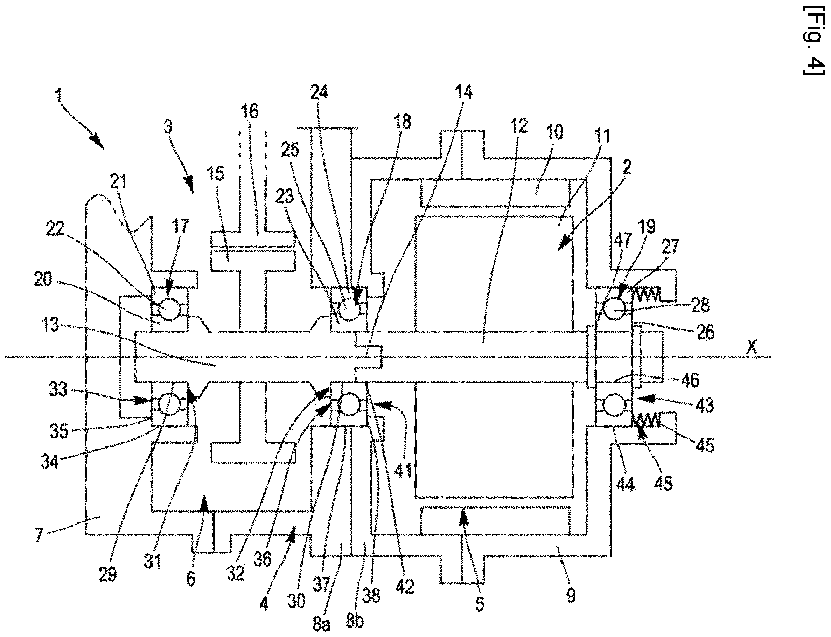

La figure 4 illustre un ensemble de transmission selon un autre mode de réalisation. Cet ensemble de transmission diffère de celui décrit ci-dessus en relation avec la figure 1 en ce que le carter 14 comporte quatre parties, à savoir une première partie 7, une deuxième partie 8b, une troisième partie 9 et une quatrième partie 8a. La première partie 7 et la quatrième partie 8a sont fixées l'une à l'autre et définissent ensemble le compartiment de transmission 6 tandis que la deuxième partie 8b et la troisième partie 9 définissent ensemble le compartiment moteur 5. Sur la figure 4, le deuxième logement 36 dans lequel est logé le deuxième palier à roulement 18 est ménagé dans la deuxième partie 8b et la quatrième partie 8a. La deuxième surface de portée externe 37 du carter 4 est, en outre, ménagée à la fois dans la deuxième partie 8b et dans la quatrième partie 8b. Ainsi, le deuxième palier à roulement 18 permet de réaliser un centrage relatif du compartiment moteur 5 par rapport au compartiment de transmission 6.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Ensemble de propulsion (1) comportant :
- un carter (4) comportant un premier logement (33) présentant une première surface de portée externe (34), un deuxième logement (36) présentant une deuxième surface de portée externe (37) et un troisième logement (43) présentant une troisième surface de portée externe (44),
- un dispositif de réduction (3) comportant un arbre d'entrée (13) qui est équipé d'une roue de transmission (15) et est guidé en rotation à l'intérieur du carter (4), selon un axe X, au moyen d'un premier et d'un deuxième paliers à roulement (17, 18), l'arbre d'entrée (13) comportant une première surface de portée interne (29) et une deuxième surface de portée interne(30) disposées axialement de part et d'autre de la roue de transmission (15), le premier palier à roulement (17) étant monté dans le premier logement (33) et disposé radialement entre la première surface de portée externe (34) et la première surface de portée interne (29) , le deuxième palier à roulement (18) étant monté dans le deuxième logement (36) et disposé radialement entre la deuxième surface de portée externe (37) et la deuxième surface de portée interne (30) de l'arbre d'entrée (13),
- un moteur électrique (2) qui comporte un stator (10) fixé à l'intérieur du carter (4) et un rotor (11) qui comporte un arbre de rotor (12) qui est accouplé en rotation à l'arbre d'entrée (13) du dispositif de réduction (3) et qui est guidé en rotation à l'intérieur du carter (4) au moyen du deuxième palier à roulement (18) et d'un troisième palier à roulement (19), l'arbre de rotor (12) comportant une première surface de portée interne (42) et une deuxième surface de portée interne (46), la première surface de portée interne(42) de l'arbre de rotor (12) étant logée radialement à l'intérieur du deuxième palier à roulement (18), le troisième palier à roulement (19) étant logé dans le troisième logement (43) et disposé radialement entre la troisième surface de portée externe (44) et la deuxième surface de portée interne (46) de l'arbre de rotor (12), **caractérisé en ce que** la deuxième surface de portée interne (30) de l'arbre d'entrée (13) présente au moins une portion présentant une longueur axiale (I1) supérieure à 60 % de la dimension axiale (13) du deuxième palier à roulement (18).

2. Ensemble de propulsion (1) selon la revendication 1, dans lequel la deuxième surface de portée interne (30) de l'arbre d'entrée (13) présente en partie ou en totalité une longueur axiale (11) qui est strictement comprise entre 60 et 80 % de la dimension axiale (13) du deuxième palier à roulement (18).

3. Ensemble de propulsion (1) selon la revendication 1 ou 2, dans lequel la première surface de portée interne (42) de l'arbre de rotor (12) présente, en partie ou en totalité, une longueur axiale (12) supérieure ou égale à 20 % de la dimension axiale (13) du deuxième palier à roulement (18).

4. Ensemble de propulsion (1) selon l'une quelconque des revendications 1 à 3, dans lequel l'un parmi l'arbre d'entrée (13) et l'arbre de rotor (12) comporte une portion mâle cannelée qui est emmanchée dans une portion femelle cannelée de l'autre.

5. Ensemble de propulsion selon la revendication 1, dans lequel l'arbre d'entrée (13) et l'arbre de rotor (12) sont accouplés l'une à l'autre par une première et une deuxième denture en prise l'une dans l'autre et respectivement ménagées à une extrémité de l'arbre d'entrée (12) et à une extrémité de l'arbre de rotor (12), la première denture et la deuxième denture présentant des dents s'étendant axialement et formant respectivement la deuxième surface de portée interne (30) de l'arbre d'entrée (13) et la première surface de portée interne (42) de l'arbre de rotor (12).

6. Ensemble de propulsion selon l'une quelconque des revendications 1 à 5, dans lequel la dimension axiale (13) du deuxième palier à roulement (18) est comprise entre 5 et 35 mm.

7. Ensemble de propulsion selon l'une quelconque des revendications 1 à 6, dans lequel le troisième logement (43) présente une troisième surface d'appui axial (45) et l'arbre de rotor (12) comporte une surface d'appui axial (47) bordant la deuxième surface de portée interne (46) de l'arbre de rotor (12), un organe élastique (48) étant disposé, dans un état comprimé, entre la troisième surface d'appui axial (45) et le troisième palier à roulement (19) de manière à exercer un effort axial sur le troisième palier à roulement (19) en direction du deuxième palier à roulement (18) qui plaque le troisième palier à roulement (19) contre la troisième surface d'appui axial (47).

8. Ensemble de propulsion selon l'une quelconque des revendications 1 à 7, dans lequel l'arbre de rotor (12) est positionné axialement en butée contre l'arbre d'entrée (13), la butée étant agencée axialement au bord de la deuxième surface de portée interne (30) de l'arbre d'entrée (13).

9. Ensemble de propulsion selon l'une quelconque des revendications 1 à 8, dans lequel, dans un ou tous les plans comprenant l'axe X, la dimension axiale (13) du deuxième palier à roulement (18) est égale à somme de la longueur axiale (11) de la deuxième surface de portée interne (30) de l'arbre d'entrée (13) et de la longueur axiale (12) de la première surface de portée interne (42) de l'arbre de rotor (12).

10. Ensemble de propulsion selon l'une quelconque des revendications 1 à 9, dans lequel le premier logement (33) présente une première surface d'appui axial (35) bordant la première surface de portée externe (34) et le deuxième logement (36) présente une deuxième surface d'appui axial (38) bordant la deuxième surface de portée externe (37), l'arbre d'entrée (13) comportant en outre une première surface d'appui axial (31) bordant la première surface de portée interne (29) et une deuxième surface d'appui axial (32) bordant la deuxième surface de portée interne (30) ; le premier palier à roulement (17) étant disposé axialement entre la première surface d'appui axial (35) du premier logement (33) et la première surface d'appui axial (31) de l'arbre d'entrée (13), le deuxième palier à roulement (18) étant disposé axialement entre la deuxième surface d'appui axial (37) du deuxième logement (36) et la deuxième surface d'appui axial (32) de l'arbre d'entrée (13).

11. Ensemble de propulsion selon la revendication 10, dans lequel le premier palier à roulement (17) et le deuxième palier à roulement (18) sont préchargés axialement, respectivement entre la première surface d'appui axial (35) du premier logement (33) et la première surface d'appui axial (31) de l'arbre d'entrée (13) et entre la deuxième surface d'appui axial (37) du deuxième logement (36) et la deuxième surface d'appui axial (32) de l'arbre d'entrée (13).

12. Ensemble de propulsion selon la revendication 11, dans lequel la première surface d'appui axial (31) de l'arbre d'entrée (13) est disposée axialement entre la première surface de portée interne (29) et la roue de transmission (15) et la deuxième surface d'appui axial (32) de l'arbre d'entrée (13) est disposée axialement entre la deuxième surface de portée interne (30) et la roue de transmission (15), le premier palier à roulement (17) et le deuxième palier à roulement (18) étant préchargés axialement l'un vers l'autre au moyen d'au moins un élément de précharge qui est disposé axialement entre la première surface d'appui axial (35) du premier logement (33) et le premier palier à roulement (17) ou entre la deuxième surface d'appui axial (37) du deuxième logement (36) et le deuxième palier à roulement (18), notamment l'élément de précharge étant une cale annulaire (39) ou une rondelle élastique (40).

13. Ensemble de propulsion (1) selon l'une quelconque des revendications 1 à 12, dans lequel le carter (4) comporte une première partie (7), une deuxième partie (8) et une troisième partie (9) qui sont fixées les unes aux autres, le premier logement (33), le deuxième logement (36) et le troisième logement (46) étant respectivement formés dans la première partie (7), la deuxième partie (8) et la troisième partie (9).

14. Ensemble de propulsion (1) selon l'une quelconque des revendications 1 à 13, dans lequel le carter (4) comporte une première partie (7), une deuxième partie (8b), une troisième partie (9) et une quatrième partie (8a) qui sont fixées les unes aux autres, le premier logement (33) et le troisième logement (46) étant respectivement formés dans la première partie (7) et la troisième partie (9), le deuxième logement (36) étant ménagé dans la deuxième partie (8b) et la quatrième partie (8a) et la deuxième surface de portée externe (37) s'étendant dans la deuxième partie (8b) et dans la quatrième partie (8a).

15. Ensemble de propulsion selon l'une des revendications précédentes dans lequel l'ensemble de propulsion présente une interférence de serrage entre l'arbre d'entrée et le deuxième palier à roulement, en particulier sa bague intérieure, et une interférence de serrage entre l'arbre de rotor et le deuxième palier à roulement, l'interférence de serrage entre l'arbre d'entrée et le deuxième palier à roulement, en particulier sa bague intérieure, étant supérieure à l'interférence de serrage entre l'arbre de rotor et le deuxième palier à roulement.

## Patentansprüche

1. Antriebsanordnung (1), umfassend:
- ein Gehäuse (4) mit einer ersten Aufnahme (33), die eine erste äußere Lagerfläche (34) aufweist, einer zweiten Aufnahme (36), die eine zweite äußere Lagerfläche (37) aufweist, und einer dritten Aufnahme (43), die eine dritte äußere Lagerfläche (44) aufweist,
- eine Untersetzungsvorrichtung (3) mit einer Eingangswelle (13), die mit einem Übertragungsrad (15) ausgestattet ist und mittels eines ersten und eines zweiten Wälzlagers (17, 18) um eine Achse X drehbar im Inneren des Gehäuses (4) geführt ist, wobei die Eingangswelle (13) eine erste innere Lagerfläche (29) und eine zweite innere Lagerfläche (30) aufweist, die axial beiderseits des Übertragungsrades (15) angeordnet sind, wobei das erste Wälzlager (17) in der ersten Aufnahme (33) montiert und radial zwischen der ersten äußeren Lagerfläche (34) und der ersten inneren Lagerfläche (29) angeordnet ist, wobei das zweite Wälzlager (18) in der zweiten Aufnahme (36) montiert und radial zwischen der zweiten äußeren Lagerfläche (37) und der zweiten inneren Lagerfläche (30) der Eingangswelle (13) angeordnet ist,
- einen Elektromotor (2), der einen Stator (10), der im Inneren des Gehäuses (4) befestigt ist, und einen Rotor (11) umfasst, der eine Rotorwelle (12) aufweist, die drehfest mit der Eingangswelle (13) der Untersetzungsvorrichtung (3) gekoppelt ist und mittels des zweiten Wälzlagers (18) und eines dritten Wälzlagers (19) drehbar im Inneren des Gehäuses (4) geführt ist, wobei die Rotorwelle (12) eine erste innere Lagerfläche (42) und eine zweite innere Lagerfläche (46) aufweist, wobei die erste innere Lagerfläche (42) der Rotorwelle (12) radial im Inneren des zweiten Wälzlagers (18) aufgenommen ist, wobei das dritte Wälzlager (19) in der dritten Aufnahme (43) aufgenommen und radial zwischen der dritten äußeren Lagerfläche (44) und der zweiten inneren Lagerfläche (46) der Rotorwelle (12) angeordnet ist, **dadurch gekennzeichnet, dass** die zweite innere Lagerfläche (30) der Eingangswelle
(13) mindestens einen Abschnitt aufweist, der eine axiale Länge (11) von mehr als 60% der axialen Abmessung (13) des zweiten Wälzlagers (18) aufweist.

2. Antriebsanordnung (1) nach Anspruch 1, bei der die zweite innere Lagerfläche (30) der Eingangswelle (13) teilweise oder vollständig eine axiale Länge (11) aufweist, die strikt zwischen 60 und 80% der axialen Abmessung (13) des zweiten Wälzlagers (18) liegt.

3. Antriebsanordnung (1) nach Anspruch 1 oder 2, bei der die erste innere Lagerfläche (42) der Rotorwelle (12) teilweise oder vollständig eine axiale Länge (12) aufweist, die größer oder gleich 20% der axialen Abmessung (13) des zweiten Wälzlagers (18) ist.

4. Antriebsanordnung (1) nach einem der Ansprüche 1 bis 3, bei der eine von der Eingangswelle (13) und der Rotorwelle (12) einen mit Keilnuten versehenen männlichen Abschnitt aufweist, der in einen mit Keilnuten versehenen weiblichen Abschnitt der anderen eingesteckt ist.

5. Antriebsanordnung nach Anspruch 1, bei der die Eingangswelle (13) und die Rotorwelle (12) miteinander durch eine erste und eine zweite Verzahnung gekoppelt sind, die miteinander in Eingriff stehen und jeweils an einem Ende der Eingangswelle (12) und an einem Ende der Rotorwelle (12) ausgebildet sind, wobei die erste Verzahnung und die zweite Verzahnung axial verlaufende Zähne aufweisen, die jeweils die zweite innere Lagerfläche (30) der Eingangswelle (13) und die erste innere Lagerfläche (42) der Rotorwelle (12) bilden.

6. Antriebsanordnung nach einem der Ansprüche 1 bis 5, bei der die axiale Abmessung (13) des zweiten Wälzlagers (18) zwischen 5 und 35 mm beträgt.

7. Antriebsanordnung nach einem der Ansprüche 1 bis 6, bei der die dritte Aufnahme (43) eine dritte axiale Anlagefläche (45) aufweist und die Rotorwelle (12) eine axiale Anlagefläche (47) aufweist, die an die zweite innere Lagerfläche (46) der Rotorwelle (12) angrenzt, wobei ein elastisches Element (48) in einem komprimierten Zustand zwischen der dritten axialen Anlagefläche (45) und dem dritten Wälzlager (19) angeordnet ist, um eine axiale Kraft auf das dritte Wälzlager (19) in Richtung des zweiten Wälzlagers (18) auszuüben, die das dritte Wälzlager (19) gegen die dritte axiale Anlagefläche (47) drückt.

8. Antriebsanordnung nach einem der Ansprüche 1 bis 7, bei der die Rotorwelle (12) axial in Anlage gegen die Eingangswelle (13) positioniert ist, wobei der Anschlag axial am Rand der zweiten inneren Lagerfläche (30) der Eingangswelle (13) angeordnet ist.

9. Antriebsanordnung nach einem der Ansprüche 1 bis 8, bei der in einer oder allen die Achse X enthaltenden Ebenen die axiale Abmessung (13) des zweiten Wälzlagers (18) gleich der Summe der axialen Länge (11) der zweiten inneren Lagerfläche (30) der Eingangswelle (13) und der axialen Länge (12) der ersten inneren Lagerfläche (42) der Rotorwelle (12) ist.

10. Antriebsanordnung nach einem der Ansprüche 1 bis 9, bei der die erste Aufnahme (33) eine erste axiale Anlagefläche (35) aufweist, die an die erste äußere Lagerfläche (34) angrenzt, und die zweite Aufnahme (36) eine zweite axiale Anlagefläche (38) aufweist, die an die zweite äußere Lagerfläche (37) angrenzt, wobei die Eingangswelle (13) ferner eine erste axiale Anlagefläche (31), die an die erste innere Lagerfläche (29) angrenzt, und eine zweite axiale Anlagefläche (32) aufweist, die an die zweite innere Lagerfläche (30) angrenzt; wobei das erste Wälzlager (17) axial zwischen der ersten axialen Anlagefläche (35) der ersten Aufnahme (33) und der ersten axialen Anlagefläche (31) der Eingangswelle (13) angeordnet ist, wobei das zweite Wälzlager (18) axial zwischen der zweiten axialen Anlagefläche (37) der zweiten Aufnahme (36) und der zweiten axialen Anlagefläche (32) der Eingangswelle (13) angeordnet ist.

11. Antriebsanordnung nach Anspruch 10, bei der das erste Wälzlager (17) und das zweite Wälzlager (18) axial vorgespannt sind, jeweils zwischen der ersten axialen Anlagefläche (35) der ersten Aufnahme (33) und der ersten axialen Anlagefläche (31) der Eingangswelle (13) und zwischen der zweiten axialen Anlagefläche (37) der zweiten Aufnahme (36) und der zweiten axialen Anlagefläche (32) der Eingangswelle (13).

12. Antriebsanordnung nach Anspruch 11, bei der die erste axiale Anlagefläche (31) der Eingangswelle (13) axial zwischen der ersten inneren Lagerfläche (29) und dem Übertragungsrad (15) angeordnet ist und die zweite axiale Anlagefläche (32) der Eingangswelle (13) axial zwischen der zweiten inneren Lagerfläche (30) und dem Übertragungsrad (15) angeordnet ist, wobei das erste Wälzlager (17) und das zweite Wälzlager (18) axial aufeinander zu mittels mindestens eines Vorspannelements vorgespannt sind, das axial zwischen der ersten axialen Anlagefläche (35) der ersten Aufnahme (33) und dem ersten Wälzlager (17) oder zwischen der zweiten axialen Anlagefläche (37) der zweiten Aufnahme (36) und dem zweiten Wälzlager (18) angeordnet ist, wobei das Vorspannelement insbesondere eine Ringscheibe (39) oder eine Federscheibe (40) ist.

13. Antriebsanordnung (1) nach einem der Ansprüche 1 bis 12, bei der das Gehäuse (4) einen ersten Teil (7), einen zweiten Teil (8) und einen dritten Teil (9) umfasst, die miteinander verbunden sind, wobei die erste Aufnahme (33), die zweite Aufnahme (36) und die dritte Aufnahme (46) jeweils im ersten Teil (7), im zweiten Teil (8) und im dritten Teil (9) ausgebildet sind.

14. Antriebsanordnung (1) nach einem der Ansprüche 1 bis 13, bei der das Gehäuse (4) einen ersten Teil (7), einen zweiten Teil (8b), einen dritten Teil (9) und einen vierten Teil (8a) umfasst, die miteinander verbunden sind, wobei die erste Aufnahme (33) und die dritte Aufnahme (46) jeweils im ersten Teil (7) und im dritten Teil (9) ausgebildet sind, wobei die zweite Aufnahme (36) im zweiten Teil (8b) und im vierten Teil (8a) ausgebildet ist und sich die zweite äußere Lagerfläche (37) im zweiten Teil (8b) und im vierten Teil (8a) erstreckt.

15. Antriebsanordnung nach einem der vorhergehenden Ansprüche, bei der die Antriebsanordnung eine Presspassung zwischen der Eingangswelle und dem zweiten Wälzlager, insbesondere dessen Innenring, und eine Presspassung zwischen der Rotorwelle und dem zweiten Wälzlager aufweist, wobei die Presspassung zwischen der Eingangswelle und dem zweiten Wälzlager, insbesondere dessen Innenring, größer ist als die Presspassung zwischen der Rotorwelle und dem zweiten Wälzlager.

## Claims

1. Propulsion assembly (1) comprising:
- a housing (4) comprising a first seat (33) having a first outer bearing surface (34), a second seat (36) having a second outer bearing surface (37) and a third seat (43) having a third outer bearing surface (44),
- a reduction device (3) comprising an input shaft (13) which is equipped with a transmission wheel (15) and is guided in rotation inside the housing (4), along an axis X, by means of first and second rolling bearings (17, 18), the input shaft (13) comprising a first inner bearing surface (29) and a second inner bearing surface (30) arranged axially on either side of the transmission wheel (15), the first rolling bearing (17) being mounted in the first seat (33) and arranged radially between the first outer bearing surface (34) and the first inner bearing surface (29), the second rolling bearing (18) being mounted in the second seat (36) and arranged radially between the second outer bearing surface (37) and the second inner bearing surface (30) of the input shaft (13),
- an electric motor (2) which comprises a stator (10) fixed inside the housing (4) and a rotor (11) which comprises a rotor shaft (12) which is rotationally coupled to the input shaft (13) of the reduction device (3) and which is guided in rotation inside the housing (4) by means of the second rolling bearing (18) and a third rolling bearing (19), the rotor shaft (12) comprising a first inner bearing surface (42) and a second inner bearing surface (46), the first inner bearing surface (42) of the rotor shaft (12) being housed radially inside the second rolling bearing (18), the third rolling bearing (19) being housed in the third seat (43) and arranged radially between the third outer bearing surface (44) and the second inner bearing surface (46) of the rotor shaft (12), **characterized in that**
the second inner bearing surface (30) of the input shaft (13) has at least one portion having an axial length (11) greater than 60% of the axial dimension (13) of the second rolling bearing (18).

2. Propulsion assembly (1) according to claim 1, wherein the second inner bearing surface (30) of the input shaft (13) has, in part or in full, an axial length (11) that is strictly between 60 and 80% of the axial dimension (13) of the second rolling bearing (18).

3. Propulsion assembly (1) according to claim 1 or 2, wherein the first inner bearing surface (42) of the rotor shaft (12) has, in part or in full, an axial length (12) greater than or equal to 20% of the axial dimension (13) of the second rolling bearing (18).

4. Propulsion assembly (1) according to any one of claims 1 to 3, wherein one of the input shaft (13) and the rotor shaft (12) comprises a splined male portion which is fitted into a splined female portion of the other.

5. Propulsion assembly according to claim 1, wherein the input shaft (13) and the rotor shaft (12) are coupled to each other by first and second gear teeth meshing with each other and respectively formed at one end of the input shaft (12) and at one end of the rotor shaft (12), the first gear teeth and the second gear teeth having axially extending teeth forming respectively the second inner bearing surface (30) of the input shaft (13) and the first inner bearing surface (42) of the rotor shaft (12).

6. Propulsion assembly according to any one of claims 1 to 5, wherein the axial dimension (13) of the second rolling bearing (18) is between 5 and 35 mm.

7. Propulsion assembly according to any one of claims 1 to 6, wherein the third seat (43) has a third axial abutment surface (45) and the rotor shaft (12) comprises an axial abutment surface (47) bordering the second inner bearing surface (46) of the rotor shaft (12), an elastic member (48) being arranged, in a compressed state, between the third axial abutment surface (45) and the third rolling bearing (19) so as to exert an axial force on the third rolling bearing (19) in the direction of the second rolling bearing (18) which presses the third rolling bearing (19) against the third axial abutment surface (47).

8. Propulsion assembly according to any one of claims 1 to 7, wherein the rotor shaft (12) is axially positioned in abutment against the input shaft (13), the abutment being arranged axially at the edge of the second inner bearing surface (30) of the input shaft (13).

9. Propulsion assembly according to any one of claims 1 to 8, wherein, in one or all planes comprising the axis X, the axial dimension (13) of the second rolling bearing (18) is equal to the sum of the axial length (11) of the second inner bearing surface (30) of the input shaft (13) and the axial length (12) of the first inner bearing surface (42) of the rotor shaft (12).

10. Propulsion assembly according to any one of claims 1 to 9, wherein the first seat (33) has a first axial abutment surface (35) bordering the first outer bearing surface (34) and the second seat (36) has a second axial abutment surface (38) bordering the second outer bearing surface (37), the input shaft (13) further comprising a first axial abutment surface (31) bordering the first inner bearing surface (29) and a second axial abutment surface (32) bordering the second inner bearing surface (30); the first rolling bearing (17) being arranged axially between the first axial abutment surface (35) of the first seat (33) and the first axial abutment surface (31) of the input shaft (13), the second rolling bearing (18) being arranged axially between the second axial abutment surface (37) of the second seat (36) and the second axial abutment surface (32) of the input shaft (13).

11. Propulsion assembly according to claim 10, wherein the first rolling bearing (17) and the second rolling bearing (18) are axially preloaded, respectively between the first axial abutment surface (35) of the first seat (33) and the first axial abutment surface (31) of the input shaft (13) and between the second axial abutment surface (37) of the second seat (36) and the second axial abutment surface (32) of the input shaft (13).

12. Propulsion assembly according to claim 11, wherein the first axial abutment surface (31) of the input shaft (13) is arranged axially between the first inner bearing surface (29) and the transmission wheel (15) and the second axial abutment surface (32) of the input shaft (13) is arranged axially between the second inner bearing surface (30) and the transmission wheel (15), the first rolling bearing (17) and the second rolling bearing (18) being axially preloaded towards each other by means of at least one preload element which is arranged axially between the first axial abutment surface (35) of the first seat (33) and the first rolling bearing (17) or between the second axial abutment surface (37) of the second seat (36) and the second rolling bearing (18), in particular the preload element being an annular shim (39) or a spring washer (40).

13. Propulsion assembly (1) according to any one of claims 1 to 12, wherein the housing (4) comprises a first part (7), a second part (8) and a third part (9) which are fastened to one another, the first seat (33), the second seat (36) and the third seat (46) being respectively formed in the first part (7), the second part (8) and the third part (9).

14. Propulsion assembly (1) according to any one of claims 1 to 13, wherein the housing (4) comprises a first part (7), a second part (8b), a third part (9) and a fourth part (8a) which are fastened to one another, the first seat (33) and the third seat (46) being respectively formed in the first part (7) and the third part (9), the second seat (36) being formed in the second part (8b) and the fourth part (8a) and the second outer bearing surface (37) extending in the second part (8b) and in the fourth part (8a).

15. Propulsion assembly according to one of the preceding claims wherein the propulsion assembly has an interference fit between the input shaft and the second rolling bearing, in particular its inner ring, and an interference fit between the rotor shaft and the second rolling bearing, the interference fit between the input shaft and the second rolling bearing, in particular its inner ring, being greater than the interference fit between the rotor shaft and the second rolling bearing.
